# EUROPEAN PATENT APPLICATION

(11) **EP 2 511 113 A1**
(43) Date of publication of application: **17.10.2012**
(21) Application number: 10835702.1
(22) Date of filing: 08.12.2010
(51) Int. Cl.: B60H 1/32, F25B 1/00, F25B 5/00

(54) **AIR CONDITIONER FOR VEHICLES**

(30) Priority: 09.12.2009 JP 2009279188
(71) Applicant: Sanden Corporation, Isesaki-shi Gunma 372-8502 (JP)
(72) Inventor: FUJII, Nobuhiko, Isesaki-shi Gunma 372-8502 (JP)
(74) Representative: Haley, Stephen
(86) International application number: PCT/JP2010/007151
(87) International publication number: WO 2011/070779

(57) **Abstract**

A vehicular air conditioner in which a plurality of parts comprising a refrigerant circuit are integrally provided to reduce an occupying space and reduce the number of the parts and the number of assembling steps.

Solution

A refrigerant circuit 1 is provided with a cold storage internal heat exchanger 10 having a high-pressure refrigerant storage unit 11 through which the high-pressure refrigerant on the downstream side of a condenser 3 flows, a low-pressure refrigerant storage unit 12 through which the low-pressure refrigerant on the downstream side of an evaporator 5 flows, and a heat storage material housing unit 13 which houses a heat storage material therein. The cold storage internal heat exchanger 10 exchanges the heat between the high-pressure refrigerant in the high-pressure refrigerant storage unit 11 and the low-pressure refrigerant in the low-pressure refrigerant storage unit 12, cools the cold storage material stored in the cold storage material housing unit 13 by means of the low-pressure refrigerant in the low-pressure refrigerant storage unit 12 when a compressor 2 is activated, cools the high-pressure refrigerant in the high-pressure refrigerant storage unit 11 by means of the cold storage material housed in the cold storage material housing unit 13 after the heat exchange with the low-pressure refrigerant of the low-pressure refrigerant storage unit 12, and cools the low-pressure refrigerant in the low-pressure refrigerant storage unit 12 by means of the cold storage material housed in the cold storage material housing unit 13 when the compressor 2 is stopped.

## Description

### Technical Field

The present invention relates to a vehicular air conditioner including a refrigerant circuit having a compressor, a condenser, a decompressor, and an evaporator.

### Background Art

A conventional vehicular air conditioner includes a refrigerant circuit having a compressor, a condenser, a decompressor, and an evaporator, and cools a cabin by driving the compressor using an engine for a vehicle as a driving source.

In such a vehicular air conditioner, the refrigerant circuit is provided with an internal heat exchanger for exchanging heat between a high-pressure refrigerant on the downstream side of the condenser and a low-pressure refrigerant on the downstream side of the evaporator so as to improve the cooling capacity.

When the air conditioner is applied for a vehicle including an idle-stop mechanism that detects stopping of the vehicle for waiting at traffic lights or the like and stops an engine, the drive of the compressor is stopped simultaneously with the stopping of the engine and thus a refrigerant is not delivered through the refrigerant circuit. Accordingly, the cooling cannot be continued. In order to continue the cooling while the compressor is stopped, a cold storage material is provided in a refrigerant passage on the downstream side of the evaporator included in the refrigerant circuit, and is cooled by a low-pressure refrigerant during operation of the compressor. Furthermore, a cold storage heat exchanger is provided for cooling the low-pressure refrigerant by the cold storage material while the compressor is stopped, and the refrigerant is liquefied by the cold storage material while the compressor is stopped. The time from the point when the compressor is stopped to the point when the pressure on the high-pressure side of the refrigerant circuit is the same as that on the low-pressure side is delayed, so that the cooling can be continued for a predetermined time (for example, see Patent Literature 1).

### Citation List

### Patent Literature

Patent Literature 1: Japanese Patent Publication No. 2007-1485

### Summary of Invention

### Technical Problem

The vehicular air conditioner includes many parts comprising the refrigerant circuit, such as the internal heat exchanger and the cold storage heat exchanger. The number of the parts and the number of assembling steps are increased, and accordingly, the large space is occupied and the manufacturing cost is increased.

An object of the present invention is to provide a vehicular air conditioner in which a plurality of parts comprising a refrigerant circuit are integrally provided to reduce an occupying space and reduce the number of parts and the number of assembling steps.

### Solution to Problem

To achieve the object of the present invention, the vehicular air conditioner including a refrigerant circuit having a compressor, a condenser, a decompressor, and an evaporator, includes a cold storage internal heat exchanger in the refrigerant circuit. The cold storage internal heat exchanger includes a high-pressure refrigerant passage through which a high-pressure refrigerant on a downstream side of the condenser flows, a low-pressure refrigerant passage through which a low-pressure refrigerant on a downstream side of the evaporator flows, and a cold storage material housing unit which houses a cold storage material. The cold storage internal heat exchanger exchanges heat between the high-pressure refrigerant in the high-pressure refrigerant passage and the low-pressure refrigerant in the low-pressure refrigerant passage, cools the cold storage material stored in the cold storage material housing unit by the low-pressure refrigerant in the low-pressure refrigerant passage when the compressor is activated, and cools the low-pressure refrigerant in the low-pressure refrigerant passage by the cold storage material when the compressor is stopped.

The high-pressure refrigerant on the downstream side of the condenser is excessively cooled, and the low-pressure refrigerant on the downstream side of the evaporator is liquefied when the compressor is stopped. Accordingly, a part of the cold storage internal heat exchanger serves as an internal heat exchanger and a cold storage heat exchanger.

According to the present invention, the part of the cold storage internal heat exchanger serves as the internal heat exchanger and the cold storage heat exchanger. Thus, the space occupied by the refrigerant circuit can be reduced, and the number of parts and the number of assembling steps can be reduced.

### Brief Description of Drawings

Figure 1 shows a refrigerant circuit of a vehicular air conditioner according to an embodiment of the present invention.
Figure 2 is a side cross-sectional view of a cold storage internal heat exchanger.
Figure 3 is a cross-sectional view taken along the line A-A' of Figure 3.
Figure 4 is a cross-sectional view taken along the line B-B' of Figure 3.

### Description of Embodiments

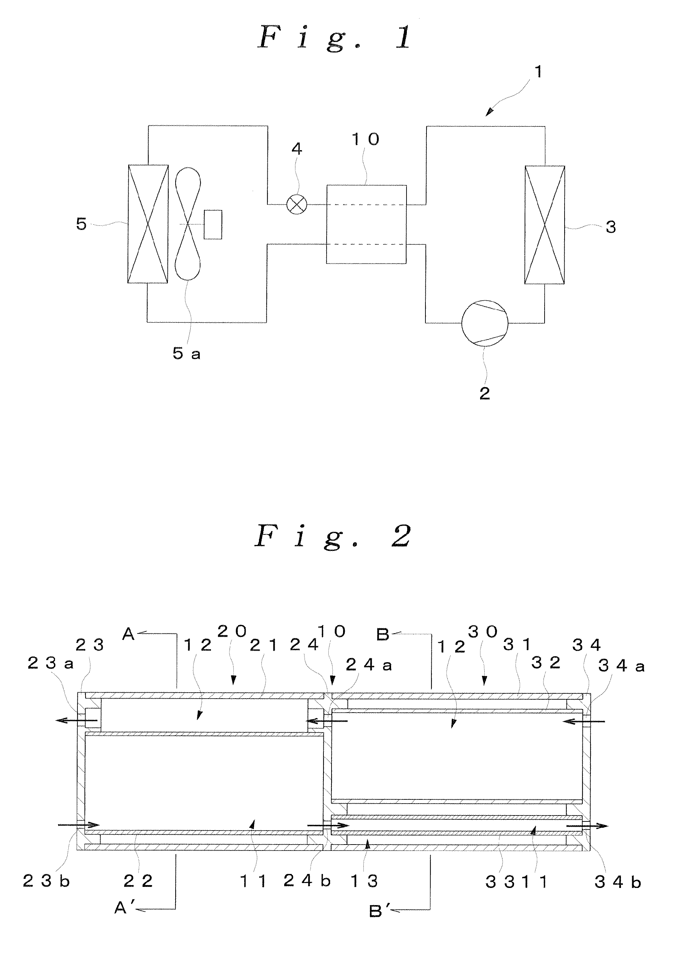

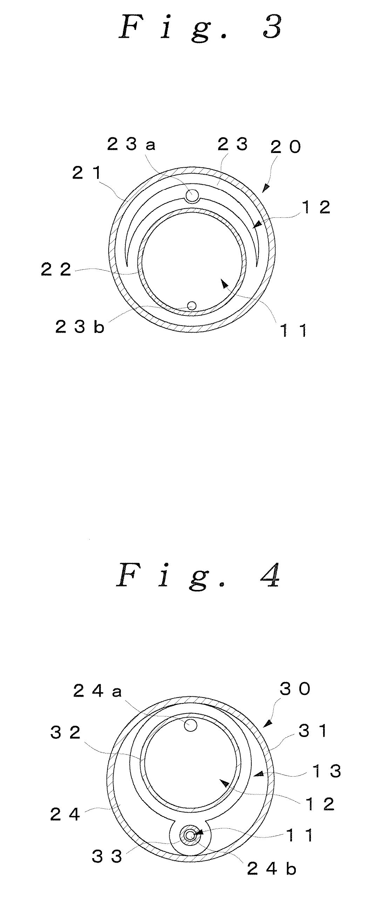

Figures 1 to 4 show an embodiment of the present invention.

A vehicular air conditioner according to the present invention is applied for a vehicle including an idle-stop mechanism that detects stopping of the vehicle for waiting at traffic lights or the like and stops an engine. The vehicular air conditioner includes a refrigerant circuit 1 shown in Figure 1.

In the refrigerant circuit 1, a commonly-known freezing cycle including a compressor 2, a condenser 3, an expansion valve 4 as a decompressor, and an evaporator 5 is connected to a cold storage internal heat exchanger 10 for exchanging heat between a high-pressure refrigerant on the downstream side of the condenser 3 and a low-pressure refrigerant on the downstream side of the evaporator 5 and exchanging heat between a cold storage material, and the high-pressure refrigerant on the downstream side of the condenser 3 and the low-pressure refrigerant on the downstream side of the evaporator 5. The compressor 2 is driven by the engine of the vehicle. When the engine is stopped by the idle-stop mechanism, the drive of the compressor 2 is also stopped. In the vehicular air conditioner, the evaporator 5 is provided inside of an air conditioning unit in a cabin. Air that is heat-exchanged with the refrigerant in the evaporator 5 is supplied to the cabin by an air blower 5a. The compressor 2, the condenser 3, the expansion valve 4, and the cold storage internal heat exchanger 10 are provided inside of the engine room outside the cabin. In the refrigerant circuit 1, HFC134a is used as the refrigerant.

The cold storage internal heat exchanger 10 is shaped like a cylinder extending in the horizontal direction. At one end side of the cold storage internal heat exchanger 10, an internal heat exchanger 20 is provided for exchanging heat between the high-pressure refrigerant on the downstream side of the condenser 3 and the low-pressure refrigerant on the downstream side of the evaporator 5. At the other end side of the cold storage internal heat exchanger 10, a cold storage heat exchanger 30 is provided for exchanging heat between the cold storage material, and the high-pressure refrigerant on the downstream side of the condenser 3 and the low-pressure refrigerant on the downstream of the evaporator 5.

The internal heat exchanger 20 includes: a first cylindrical member 21; a second cylindrical member 22 provided on the lower portion of the first cylindrical member 21; a first closing plate 23 that closes one ends of the first cylindrical member 21 and the second cylindrical member; and a partition plate 24 provided on the other ends of the first cylindrical member 21 and the second cylindrical member 22 for partitioning between the internal heat exchanger 20 and the cold storage heat exchanger 30.

The cold storage heat exchanger 30 includes: a third cylindrical member 31 that houses the cold storage material therein; a fourth cylindrical member 32 provided on the upper portion of the third cylindrical member 31; a fifth cylindrical member 33 provided on the lower portion of the third cylindrical member 31; a partition plate 24 provided on one ends of the third cylindrical member 31, the fourth cylindrical member 32, and the fifth cylindrical member 33; and a second closing plate 34 for closing the other ends of the third cylindrical member 31, the fourth cylindrical member 32, and the fifth cylindrical member 33.

The first closing plate 23 includes a low-pressure refrigerant outlet 23a at the upper portion of the one end of the first cylindrical member 21, and includes a high-pressure refrigerant inlet 23b at the lower portion of the one end of the second cylindrical member 22. The partition plate 24 includes a first communication hole 24a at the upper portion of the other end of the first cylindrical member 21 and at the upper portion of the one end of the fourth cylindrical member 32, and includes a second communication hole 24b at the lower portion of the other end of the second cylindrical member 22 and at the one end of the fifth cylindrical member 33. Furthermore, the second closing plate 34 includes a low-pressure refrigerant inlet 34a at the upper portion of the other end of the fourth cylindrical member 32, and includes a high-pressure refrigerant inlet 34b at the other end of the fifth cylindrical member 33. A high-pressure refrigerant storage unit 11, through which the high-pressure refrigerant that flows from the condenser 3 is delivered and which can store a predetermined amount of high-pressure refrigerant, is provided in the second cylindrical member 22 and the fifth cylindrical member 33. A low-pressure refrigerant storage unit 12, through which the low-pressure refrigerant that flows from the evaporator 5 is delivered and which can store a predetermined amount of low-pressure refrigerant, is provided in the first cylindrical member 21 and the fourth cylindrical member 32. A cold storage material housing unit 13 is provided in the third cylindrical member 31. Coolant and water for cooling the engine as the cold storage material is housed in the cold storage material housing unit 13.

In the vehicular air conditioner as described above, the compressor 2 is driven during traveling of the vehicle. The refrigerant discharged from the compressor 2 radiates heat in the condenser 3 to be liquefied, and flows through the high-pressure refrigerant storage unit 11 of the cold storage internal heat exchanger 10. The refrigerant delivered from the high-pressure refrigerant storage unit 11 of the cold storage internal heat exchanger 10 is depressurized in the expansion valve 4, and absorbs heat to evaporate in the evaporator 5. The refrigerant is delivered through the low-pressure refrigerant storage unit 12 of the cold storage internal heat exchanger 10 and then is sucked into the compressor 2.

During travelling of the vehicle, the cold storage material housed in the cold storage material housing unit 13 of the cold storage internal heat exchanger 10 is cooled by the low-pressure refrigerant flowing through the low-pressure refrigerant storage unit 12 via the fourth cylindrical member 32. The refrigerant flowing through the high-pressure refrigerant storage unit 11 of the cold storage internal heat exchanger 10 is excessively cooled by heat-exchange with the refrigerant flowing through the low-pressure refrigerant storage unit 12 via the second cylindrical member 22, and is further excessively cooled by heat-exchange with the cold storage material housed in the cold storage material housing unit 13 via the fifth cylindrical member 33. Since the refrigerant liquefied in the condenser 3 is temporarily stored in the second cylindrical member 22 serving as the high-pressure refrigerant storage unit 11 of the cold storage internal heat exchanger 10, the refrigerant is supplied to the evaporator 5 depending on the cooling load.

When the engine is stopped by detection of stopping of the vehicle for waiting at traffic lights or the like and thus the drive of the compressor 2 is stopped, the refrigerant is delivered from the high-pressure side to the low-pressure side until the pressure in the refrigerant circuit 1 becomes equalizing. The low-pressure refrigerant in the low-pressure refrigerant storage unit 12 of the cold-storage internal heat exchanger 10 is cooled by the cold storage material of the cold storage material housing unit 13 and is liquefied, and accordingly, the increase of the pressure at the low-pressure side in the refrigerant circuit 1 becomes slow. Therefore, the time required for equalizing the pressure in the refrigerant circuit 1 becomes long. Thus, even when the drive of the compressor 2 is stopped, the cabin can be continued to be cooled while the refrigerant flows in the refrigerant circuit 1.

While the drive of the compressor 2 is stopped, the refrigerant flowing through the low-pressure refrigerant storage unit 12 of the cold storage internal heat exchanger 10 is cooled by the cold storage material of the cold storage material housing unit 13 to be liquefied, and remains in the fourth cylindrical member 32 of the low-pressure refrigerant storage unit 12. When the liquefied refrigerant overflows from the fourth cylindrical member 32 of the low-pressure refrigerant storage unit 12, the overflowed liquefied refrigerant is delivered into the first cylindrical member 21 of the low-pressure refrigerant storage unit 12 and is heated by the refrigerant in the high-pressure refrigerant storage unit 12 via the second cylindrical member 22 to be evaporated. Accordingly, the liquefied refrigerant does not flow out of the refrigerant outlet 23a provided on the upper portion of the first cylindrical member 21 of the low-pressure refrigerant storage unit 12.

In the vehicular air conditioner according to the embodiment, the refrigerant circuit 1 is provided with the cold storage internal heat exchanger 10 including the high-pressure refrigerant storage unit 11 through which the high-pressure refrigerant on the downstream side of the condenser 3 flows, the low-pressure refrigerant storage unit 12 through which the low-pressure refrigerant on the downstream side of the evaporator 5 flows, and the heat storage material housing unit 13 which houses the heat storage material therein. The cold storage internal heat exchanger 10 exchanges the heat between the high-pressure refrigerant in the high-pressure refrigerant storage unit 11 and the low-pressure refrigerant in the low-pressure refrigerant storage unit 12, cools the cold storage material stored in the cold storage material housing unit 13 by means of the low-pressure refrigerant in the low-pressure refrigerant storage unit 12 when the compressor 2 is activated, and cools the low-pressure refrigerant in the low-pressure refrigerant storage unit 12 by means of the cold storage material stored in the cold storage material housing unit 13 when the compressor 2 is stopped. Accordingly, a part of the cold storage internal heat exchanger 10 can serve as an internal heat exchanger and as a cold storage heat exchanger. Moreover, a space occupied by the refrigerant circuit 1 can be reduced, and the number of parts and the number of assembling steps can be also reduced.

When the compressor 2 is activated, the high-pressure refrigerant in the high-pressure refrigerant storage unit 11 after heat-exchange with the low-pressure refrigerant in the low-pressure refrigerant storage unit 12 is cooled by the cool storage material in the heat strage material housing unit 13. Accordingly, after the high-pressure refrigerant is excessively cooled by heat-exchange with the refrigerant in the low-pressure refrigerant storage unit 12, the high-pressure refrigerant is further excessively cooled by heat-exchange with the cold storage material in the cold storage material housing unit 13. Thus, the excessive cooling of the high-pressure refrigerant can be reliably performed.

The cold storage internal heat exchanger 10 includes the low-pressure refrigerant, storage unit 12 through which the low-pressure refrigerant on the downstream side of the evaporator 5 flows and which can store a predetermined amount of low-pressure refrigerant, and the refrigerant outlet 21a of the low-pressure refrigerant storage unit 12 is provided on the upper portion of the first cylindrical member 21. Accordingly, the low-pressure refrigerant cooled by the cold storage material to be liquefied is presented from flowing out of the low-pressure refrigerant storage unit 12. The liquid compression by the compressor 2 can be presented without independently providing an accumulator to the refrigerant circuit 1.

The cold storage internal heat exchanger 10 includes the high-pressure refrigerant storage unit 11 through which the high-pressure refrigerant on the downstream side of the condenser 3 flows and which can store a predetermined amount of high-pressure refrigerant. Accordingly, the refrigerant liquefied in the condenser 3 can be temporarily stored in the high-pressure refrigerant storage unit 11. Without independently providing a liquid receiver to the refrigerant circuit 1, the refrigerant can be reliably supplied to the evaporator 5 when the cooling load is changed.

At this time, the high-pressure refrigerant in the high-pressure refrigerant storage unit 11 after heat-exchange with the low-pressure refrigerant in the low-pressure refrigerant storage unit 12 is cooled by the cold storage material of the cold storage material housing unit 13. Accordingly, even when the internal capacity of the second cylindrical member 22 is increased for storing the liquefied refrigerant in the high-pressure refrigerant storage unit 11, the high-pressure refrigerant can be excessively cooled. The accumulating function and the internal heat exchanging function can be reliably obtained.

### Industrial Applicability

The present invention is widely applicable to an air conditioner including a refrigerant circuit having a compressor, a condenser, a decompressor, and an evaporator.

### Reference Signs List

1 ... refrigerant circuit, 2 ... compressor, 3 ... condenser, 4 ... expansion valve, 5 ... evaporator, 10 ... cold storage internal heat exchanger, 11 ... high-pressure refrigerant storage unit, 12 ... low-pressure refrigerant storage unit, 13 ... cold storage material housing unit, 20 ... internal heat exchanger, 21 ... first cylindrical member, 22 ... second cylindrical member, 30 ... cold storage heat exchanger, 31 ... third cylindrical member, 32 ... fourth cylindrical member, 33 ... fifth cylindrical member

## Claims

1. A vehicular air conditioner including a refrigerant circuit having a compressor, a condenser, a decompressor, and an evaporator, comprising:
a cold storage internal heat exchanger in the refrigerant circuit, the cold storage internal heat exchanger including a high-pressure refrigerant passage through which a high-pressure refrigerant on a downstream side of the condenser flows, a low-pressure refrigerant passage through which a low-pressure refrigerant on a downstream side of the evaporator flows, and a cold storage material housing unit which houses a cold storage material, the cold storage internal heat exchanger exchanging heat between the high-pressure refrigerant in the high-pressure refrigerant passage and the low-pressure refrigerant in the low-pressure refrigerant passage, cooling the cold storage material stored in the cold storage material housing unit by the low-pressure refrigerant in the low-pressure refrigerant passage when the compressor is activated, and cooling the low-pressure refrigerant in the low-pressure refrigerant passage by the cold storage material when the compressor is stopped.

2. The vehicular air conditioner according to claim 1, wherein the cold storage internal heat exchanger is structured to cool the high-pressure refrigerant in the high-pressure refrigerant passage using the cold storage material after heat-exchange with the low-pressure refrigerant in the low-pressure refrigerant passage when the compressor is activated.

3. The vehicular air conditioner according to claim 1 or 2, wherein a low-pressure refrigerant storage unit through which the low-pressure refrigerant on the downstream side of the evaporator flows and which can store a predetermined amount of low-pressure refrigerant is provided as the low-pressure refrigerant passage of the cold storage internal heat exchanger, and an outlet for the low-pressure refrigerant in the low-pressure refrigerant storage unit is provided on an upper portion of the low-pressure refrigerant storage unit.

4. The vehicular air conditioner according to claim 1, 2, or 3, wherein a high-pressure refrigerant storage unit through which the high-pressure refrigerant on the downstream of the condenser flows and which can store a predetermined amount of high-pressure refrigerant is provided as the high-pressure refrigerant passage of the cold storage internal heat exchanger.
